# EUROPÄISCHE PATENTSCHRIFT

(11) **EP 2 693 165 B1**
(45) Veröffentlichungstag und Bekanntmachung des Hinweises auf die Patenterteilung: **15.05.2019**
(21) Anmeldenummer: 13178491.0
(22) Anmeldetag: 30.07.2013
(51) Int. Cl.: G01B 11/00, G01B 11/25, G01B 11/02

(54) **Verfahren zum Ermitteln der Position eines Objekts**
Method for determining the position of an object
Procédé de détermination de la position d'un objet

(30) Priorität: 02.08.2012 DE 102012015324
(43) Veröffentlichungstag der Anmeldung: 05.02.2014
(73) Patentinhaber: KUKA Deutschland GmbH, 86165 Augsburg (DE)
(72) Erfinder: Kohler, Thomas, 86368 Gersthofen (DE)
(74) Vertreter: Ege Lee & Partner Patentanwälte PartGmbB

(56) Entgegenhaltungen:
- DE-A1-102005 032 244
- US-A- 5 104 216
- US-A1- 2005 231 734
- US-A1- 2011 270 562

## Beschreibung

Die Erfindung betrifft ein Verfahren zum Ermitteln einer Position oder einer Lage eines Objekts insbesondere bezüglich eines Bezugskoordinatensystems.

Bei bestimmten Anwendungen ist es nötig, die Position, gegebenenfalls auch die Lage, d.h. die Position und die Orientierung, eines Objekts z.B. bezüglich eines Bezugskoordinatensystems zu ermitteln. Ein Beispiel einer solchen Anwendung ist die Bestimmung der Position bzw. Lage eines Objekts relativ zu einem Industrieroboter bzw. zu dessen Bezugskoordinatensystem. Ein Objekt ist beispielsweise ein Werkstück, das mit dem Industrieroboter bearbeitet werden soll.

Die DE 10 2005 032 244 A1 offenbart ein Verfahren zur Fehlerdetektierung an einer Kante. Es ist vorgesehen, eine Prüfeinheit unter einem Flächensensor zu bewegen und vor der Prüfung entsprechend auszurichten. Es erfolgt eine kontinuierliche Bestimmung einer Kantenposition der Prüfeinheit, welche aufgrund einer Startposition einer Laserlinie innerhalb einer einzeln aufgenommenen Zeile unter Berücksichtigung der gestreuten Intensität ermittelt wird.

Die US 5,104,216 offenbart die Position eines Objekts zu bestimmen und die US 2011/0270562 A1 offenbart eine Vorrichtung mit einem Lichtschnittsensor zum Ermitteln des Profils eines Objekts.

In US 2005/231734 A1 wird ein Lichtschnittsensor verwendet um die Position eines Objekts zu bestimmen, das sich auf einem Förderband befindet.

Aufgabe der Erfindung ist es, ein verbessertes Verfahren zum Ermitteln einer Position oder einer Lage eines Objekts insbesondere bezüglich eines Bezugskoordinatensystems anzugeben.

Die Aufgabe der Erfindung wird gelöst durch ein Verfahren 2-entsprechend der Definition des Anspruchs 1, zum Ermitteln der Position oder der Lage eines Objekts mittels eines Lichtschnitt-Sensor, welcher ein Licht aussendet, welches eine Lichtlinie auf einer Oberfläche erzeugt, aufweisend folgende Verfahrensschritte:
- Durchführen einer Suchfahrt durch automatisches Bewegen des Lichtschnitt-Sensors mit einer Bewegungskomponente rechtwinklig zur Lichtlinie und rechtwinklig zur Austrittsrichtung des Lichts mittels einer Bewegungsvorrichtung,
- während der Suchfahrt, Aufnehmen von Bilddaten mittels des Lichtschnitt-Sensors,
- Auswerten der Bilddaten,
- Erkennen einer markanten Stelle, insbesondere einer Außenkante des Objekts aufgrund der ausgewerteten Bilddaten, und
- Ermitteln der Position oder der Lage des Objekts aufgrund der Position des Lichtschnitt-Sensors, die der markanten Stelle des Objekts zugeordnet ist, und aufgrund eines Auswertens der der markanten Stelle des Objekts zugeordneten Bilddaten.

Für das Ermitteln der Position des Objekts, z.B. ein Werkstück, wird ein Lichtschnitt-Sensor verwendet. Lichtschnitt-Sensoren als solche sind dem Fachmann im Prinzip bekannt. Sie umfassen insbesondere einen Linienprojektor und eine Kamera. Der Linienprojektor umfasst z.B. einen Laser als Lichtquelle, insbesondere eine Laserdiode mit nachgeschalteter Optik, und erzeugt eine auf einem Objekt projizierte relativ schmale Lichtlinie. Mittels der Kamera, welche ein Bild von der auf dem Objekt projizierten Lichtlinie aufnimmt, wird die Lichtlinie beobachtet.

Der Lichtschnitt-Sensor arbeitet vorzugsweise nach dem dem Fachmann im Prinzip bekannten Triangulationsprinzip, d.h. der Linienprojektor erzeugt und sendet ein Licht, z.B. ein Laserlicht, welches auf dem Objekt, beispielsweise dem Werkstück, die Lichtlinie projiziert. Diese wird von der Kamera "beobachtet" bzw. die Kamera nimmt ein Bild von der projizierten Lichtlinie auf, sodass durch mathematische Berechnungen, welche dem Fachmann im Prinzip bekannt sind, aus den mittels der Kamera aufgenommener Bildern bzw. den diesen Bildern zugeordneten Bilddaten ein Oberflächenprofil des Objektes bzw. des Werkstücks inklusive von Abstandswerten (Abstand zwischen dem Lichtschnitt-Sensor und der auf dem Objekt bzw. dem Werkstück projizierten Lichtlinie) relativ zum Lichtschnitt-Sensor erstellt wird. Somit ist es möglich, an einer bestimmten Position zwei von drei Raumkoordinaten des Objekts zu bestimmen, und zwar eine Koordinate in Richtung der Lichtlinie und eine Koordinate in Richtung des von der Lichtquelle gesendeten Lichts. Ist beispielsweise dem Lichtschnitt-Sensor ein kartesisches Koordinatensystem zugeordnet, dann erstreckt sich beispielsweise die Y-Koordinate in Richtung der Lichtlinie, die rechtwinklig zur Y-Koordinate ausgerichtete Z-Koordinate in Richtung des ausgesendeten Lichts und die X-Koordinate rechtwinklig zu den Y- und Z-Koordinaten. In diesem Fall kann also mittels des Lichtschnitt-Sensors die Y- und Z-Koordinaten ermittelt werden.

Um die Position des Objekts zu ermitteln, wird noch eine dritte Raumkoordinate benötigt. Diese erhält man, indem erfindungsgemäß die Suchfahrt mittels der Bewegungsvorrichtung durchgeführt wird. Während der Suchfahrt wird der Lichtschnitt-Sensor mittels der Bewegungsvorrichtung mit einer Bewegungskomponente rechtwinklig zur Lichtlinie und rechtwinklig zur Austrittsrichtung des Lichts bewegt, also gegebenenfalls mit einem Bewegungskomponente in Richtung der X-Koordinate. Während der Suchfahrt nimmt der Lichtschnitt-Sensor Bilder von der Lichtlinie auf. Die den Bildern zugeordneten Bilddaten werden z.B. mittels Bilderkennung ausgewertet, sodass das Erreichen der markanten Stelle des Objekts ermöglicht wird. Die markante Stelle ist z.B. eine Au-ßenkante des Objekts. Da während der Suchfahrt der Lichtschnitt-Sensor zumindest mit einer Bewegungskomponente bewegt wird, die rechtwinklig zur Lichtlinie und rechtwinklig zur Austrittsrichtung des Lichts ausgerichtet ist, ergibt die Position des Lichtschnitt-Sensors, die der markanten Stelle des Objekts zugeordnet ist, die fehlende Information über die Position des Objekts.

Um die Position oder Lage des Objekts zu ermitteln, wird vorzugsweise der Abstand zwischen dem Lichtschnitt-Sensor und dem Objekt an der Position des Lichtschnitt-Sensors, die der markanten Stelle des Objekts zugeordnet ist, ermittelt. Dem Abstand ist die Z-Koordinate zugeordnet.

Nach einer Ausführungsform des erfindungsgemäßen Verfahrens wird der Lichtschnitt-Sensor während der Suchfahrt in einer Richtung rechtwinklig zur Lichtlinie bewegt.

Gemäß einer weiteren Variante des erfindungsgemäßen Verfahrens wird der Lichtschnitt-Sensor während der Suchfahrt in einer Richtung rechtwinklig zur Austrittsrichtung des Lichts bewegt. Somit bewegt sich der Lichtschnitt-Sensor gemäß dieser Variante während der Suchfahrt entlang einer Ebene, in der die X-Koordinate verläuft.

Nach einer weiteren Variante des erfindungsgemäßen Verfahrens wird der Lichtschnitt-Sensor während der Suchfahrt zunächst in einer Richtung ungleich rechtwinklig zur Austrittsrichtung des Lichts bewegt, bis eine Ebene erkannt wird, auf der das Objekt liegt. Anschließend wird der Lichtschnitt-Sensor während der Suchfahrt in eine Richtung rechtwinklig zur Austrittsrichtung des Lichts bewegt. Diese Variante bietet sich an, wenn der Lichtschnitt-Sensor am Beginn der Suchfahrt so weit vom Objekt entfernt ist, dass das Objekt außerhalb des Messfensters bzw. des Sichtbereichs (Englisch: Field of View, abgekürzt: FOV) des Lichtschnitt-Sensors liegt.

Die Bewegungsvorrichtung ist vorzugsweise als ein Industrieroboter ausgebildet. Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren, über Gelenke verbundene Glieder und programmierbare Steuerungen (Steuervorrichtungen) auf, die während des Betriebs die Bewegungsabläufe des Industrieroboters steuern bzw. regeln. Die Glieder werden normalerweise mittels Antrieben, insbesondere elektrischen Antrieben, die von der Steuervorrichtung angesteuert werden, insbesondere bezüglich der Bewegungsachsen bewegt. Die Steuervorrichtung des Industrieroboters ist eingerichtet, die Antriebe des Roboterarms derart anzusteuern, um den Lichtschnitt-Sensor während der Suchfahrt zu bewegen.

Die Position oder Lage des Objekts kann dann z.B. relativ zu einem Basiskoordinatensystem des Industrieroboters ermittelt werden.

Ausführungsbeispiele der Erfindung sind exemplarisch in den beigefügten schematischen Zeichnungen dargestellt. Es zeigen:
- Figur 1: einen Industrieroboter mit einer Steuervorrichtung und einem Roboterarm, an dem ein Lichtschnitt-Sensor befestigt ist,
- Figuren 2a, 2b: verschiedene Ansichten des LichtschnittSensors, und
- Figuren 3, 4: ein Werkstück und vom Lichtschnitt-Sensor erzeugte projizierte Lichtlinien.

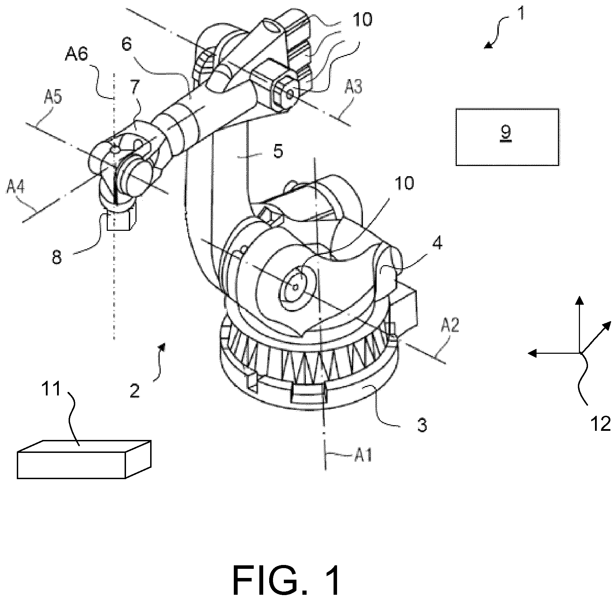

Die Fig. 1 zeigt in einer perspektivischen Darstellung einen Industrieroboter 1 mit einem Roboterarm 2.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer als Flansch ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Drehachsen A4, A5, A6.

Um den Industrieroboter 1 bzw. dessen Roboterarm 2 zu bewegen, umfasst dieser in allgemein bekannter Weise mit einer Steuervorrichtung 9 verbundene Antriebe, die insbesondere elektrische Antriebe sind. In der Figur 1 sind nur einige der elektrischen Motoren 10 dieser Antriebe gezeigt. Auf der Steuervorrichtung 9 läuft ein Rechenprogramm, mittels dem die Steuervorrichtung 9 im Betrieb des Industrieroboters 1 diesen beispielsweise derart ansteuert, dass der Flansch oder ein sogenannter Tool Center Point eine vorbestimmte Bewegung ausführt. Gegebenenfalls regelt die Steuervorrichtung 9 die Antriebe, wie dies im Prinzip dem Fachmann bekannt ist. Gegebenenfalls sind die elektrischen Antriebe geregelte Antriebe und die Steuervorrichtung 9 erzeugt Soll-Signale für die geregelten Antriebe.

Im Falle des vorliegenden Ausführungsbeispiels soll der Industrieroboter 1 in automatisierter Weise ein Objekt 11, insbesondere ein Werkstück mittels des Endeffektors bearbeiten. Im Falle des vorliegenden Ausführungsbeispiels weist das als Werkstück ausgeführte Objekt 11 auf einer ihrer Oberflächen, insbesondere auf der nach oben gerichteten Oberfläche, eine Naht 11a auf.

Vor dieser Bearbeitung wird in automatisierter Weise die Position, gegebenenfalls auch die Orientierung des Objekts 11 bzw. des Werkstücks, insbesondere der Naht 11a bezüglich eines vorgegeben Punktes bzw. bezüglich des Industrieroboters 1 bestimmt. Die Position bzw. Lage (Position und Orientierung) des Objekts 11 bzw. des Werkstücks bezüglich des Industrieroboters 1 wird vorzugsweise bezüglich eines Bezugskoordinatensystems 12 bestimmt. Das Bezugskoordinatensystem 12 ist insbesondere ortsfest und vorzugsweise das BasisKoordinatensystem des Industrieroboters 1, welches insbesondere ortsfest bezüglich des Gestells 3 ist.

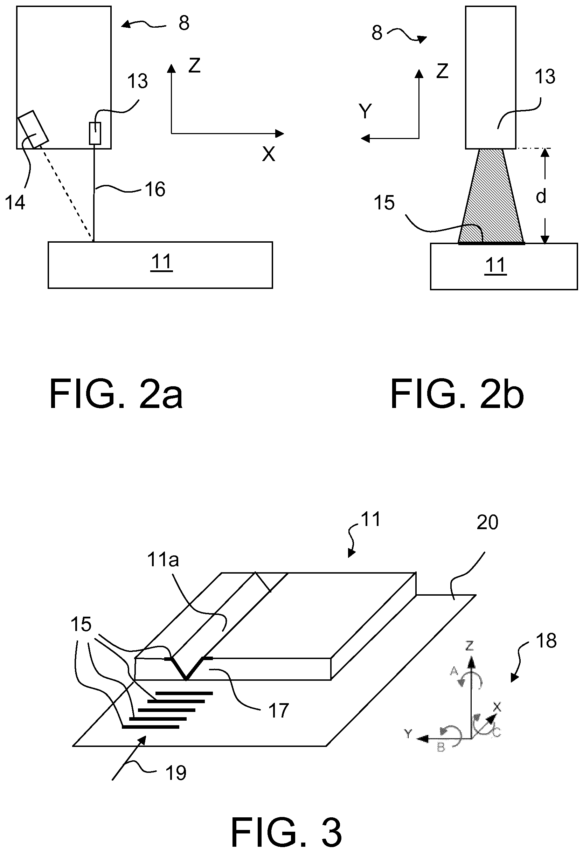

Um die Position bzw. Lage des Objekts 11 bzw. Werkstücks in automatisierter Weise insbesondere mittels des Industrieroboters 1 zu bestimmen, wird an der Befestigungsvorrichtung des Roboterarms 2 ein Lichtschnitt-Sensor 8 befestigt. Eine Seitenansicht des Lichtschnitt-Sensors 8 ist in der Figur 2a und eine Frontansicht des Lichtschnitt-Sensors 8 ist in der Figur 2b dargestellt.

Lichtschnitt-Sensoren sind dem Fachmann im Prinzip bekannt. Sie umfassen insbesondere einen Linienprojektor 13 und eine Kamera 14. Der Linienprojektor 13 umfasst z.B. einen Laser als Lichtquelle, insbesondere eine Laserdiode mit nachgeschalteter Optik, und erzeugt eine auf das Objekt 11 projizierte relativ schmale Lichtlinie 15. Mittels der Kamera 14, welche ein Bild von der auf dem Objekt 11 projizierten Lichtlinie 15 aufnimmt, wird die Lichtlinie 15 beobachtet.

Der Lichtschnitt-Sensor 8 arbeitet nach dem dem Fachmann im Prinzip bekannten Triangulationsprinzip, d.h. der Linienprojektor 13 erzeugt und sendet ein Laserlicht 16, welches auf dem Objekt 11, beispielsweise dem Werkstück, die Lichtlinie 15 projiziert. Diese wird von der Kamera 14 "beobachtet" bzw. die Kamera 14 nimmt ein Bild von der projizierten Lichtlinie 15 auf, sodass durch mathematische Berechnungen, welche dem Fachmann im Prinzip bekannt sind, aus den mittels der Kamera 14 aufgenommener Bildern bzw. den diesen Bildern zugeordneten Bilddaten ein Oberflächenprofil des Objektes 11 bzw. des Werkstücks inklusive von Abstandswerten (Abstand d zwischen dem Schnittbild-Sensor 8 und der auf dem Objekt 11 bzw. dem Werkstück projizierten Lichtlinie 15) relativ zum Lichtschnitt-Sensor 8 erstellt wird.

Es ist auch möglich, einen Sensor zu verwenden, welcher das Laserlicht nicht optisch oder mechanisch aufspreizt, wie in der Figur 2b gezeigt, sondern lediglich einen Punkt auf das Objekt 11 projiziert. Ein Profil ist damit nicht (einfach) erkennbar, lediglich eine Abstandsinformation kann generiert werden.

Dem Lichtschnitt-Sensor 8 ist ein eigenes Koordinatensystem 18 zugeordnet, welches im Falle des vorliegenden Ausführungsbeispiels ein kartesisches Koordinatensystem mit den Koordinaten X, Y, Z ist. Dabei verläuft die Y-Koordinate entlang der Lichtlinie 15 und die Z-Koordinate rechtwinklig zur Y-Koordinate, sowie in der Ebene, welche durch das Laserlicht 16 und der Lichtlinie 15 aufgespannt ist. Die X-Koordinate verläuft rechtwinklig zur Y-Koordinate und zur Z-Koordinate.

Um die Position bzw. Lage des Objekts 11 bzw. des Werkstücks zu ermitteln, wird zunächst eine sogenannte Suchfahrt des Lichtschnitt-Sensors 8 durchgeführt. Dies ist in der Fig. 3 veranschaulicht. Dazu läuft auf der Steuervorrichtung 9 des Industrieroboters 1 ein Rechenprogramm, aufgrund dessen die Antriebe des Roboterarms 2 derart angesteuert werden, sodass der Lichtschnitt-Sensor 8 eine vorgegebene Bewegung, nämlich die Suchfahrt, durchführt. Das Objekt 11 bzw. das Werkstück liegt z.B. auf einer Oberfläche 20.

Die Suchfahrt ist derart ausgeführt, sodass der Industrieroboter 1 den Lichtschnitt-Sensor 8 derart bewegt, dass sich dieser zumindest teilweise rechtwinklig, vorzugsweise völlig rechtwinklig zur Y-Koordinate bzw. rechtwinklig zur Lichtlinie 15 bewegt, also zumindest eine Bewegungskomponente in X-Richtung aufweist. Aufgrund dieser Suchfahrt kann eine zusätzliche Messdimension erzeugt werden. Im Falle des vorliegenden Ausführungsbeispiels bewegt der Industrieroboter 1 den Lichtschnitt-Sensor 8 rechtwinklig zur Z-Koordinate, insbesondere in Richtung der X-Koordinate. Die Richtung der Suchfahrt ist mit einem Pfeil 19 angedeutet.

Somit wird im Falle des vorliegenden Ausführungsbeispiels der Lichtschnitt-Sensor 8 während der Suchfahrt so in Richtung des Objekts 11 bzw. Werkstücks bewegt, bis automatisch eine markante Stelle, z.B. eine Außenkante 17 des Objekts 11 bzw. Werkstücks während der Bewegung bzw. Suchfahrt erkannt wird. Dazu wertet z.B. die Steuervorrichtung 9 mittels eines Bilderkennungs-Rechenprogramms die vom Lichtschnitt-Sensor 8 stammenden Bilddaten aus.

Wird die Außenkante 17 des Objekts 11 bzw. Werkstücks erkannt, dann wird z.B. durch einen Interrupt der aktuelle Messwert des Lichtschnitt-Sensors 8 gelesen und durch Zuordnung zur aktuellen Roboterposition, d.h. der aktuellen Position der Befestigungsvorrichtung bzw. eines dem Roboterarms 2 bzw. dem Lichtschnitt-Sensors 8 zugeordneten Tool-Center Points, alle benötigten Koordinaten X, Y, Z des Objekts 11 bzw. Werkstücks und gegebenenfalls auch eine Verdrehung C bezüglich der X-Koordinate insbesondere in einem Vorgang ermittelt. Für das Ermitteln der Y-Koordinate werden die Bilddaten derart ausgewertet, sodass die Position der Naht 11a bezüglich der Y-Koordinate erkannt wird.

Für das Bestimmen der benötigten Koordinaten wird auch der Abstand d des Lichtschnitt-Sensors 8 zum Objekt 11 bzw. Werkstück ermittelt. Anschließend kann die Position bzw. Lage des Objekts bzw. des Werkstücks aufgrund der bekannten Position bzw. Lage des Lichtschnitt-Sensors 8 relativ zum Bezugskoordinatensystem 12 z.B. mittels eines auf der Steuervorrichtung 9 laufenden Rechenprogramms ermittelt werden.

Über die Geschwindigkeit, mit der der Lichtschnitt-Sensor 8 während der Suchfahrt bewegt wird, lässt sich die Genauigkeit der X-Koordinate beeinflussen.

Eventuell sind auch eine relativ schnelle Suchfahrt zur Grobpositionierung und eine nachfolgende langsamere Suchfahrt zur Genauigkeitserhöhung möglich.

Prinzipiell kann die Richtung der Suchbewegung auch umgekehrt werden, d.h. Start auf dem Objekt 11 und Erkennen der Außenkante 17 beim Verlassen der Oberfläche des Objekts 11.

In dem in der Figur 3 gezeigten Ausführungsbeispiel ist während der Suchfahrt das Objekt 11 derart nah am Lichtschnitt-Sensor 8, sodass dieser beim Erreichen der Außenkante 17 diese auch zuverlässig erkennt.

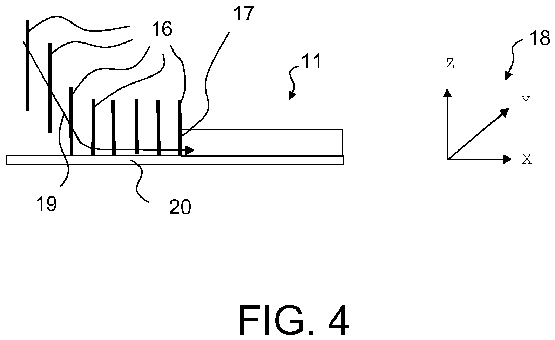

Ist jedoch beispielsweise zu erwarten, dass das Objekt 11 so stark von der zu erwartenden Position abweicht, so dass es bei der obenstehend beschriebenen Suchfahrt nicht gefunden werden kann, kann die Art und Weise der Suchfahrt verändert werden, wie dies beispielsweise in der Figur 4 veranschaulicht ist. Die Suchfahrt ist wiederum mit dem Pfeil 19 veranschaulicht.

Zunächst bewegt der Roboterarm 2 den Lichtschnitt-Sensor 8 in Richtung der Oberfläche 20, welches im gezeigten Ausführungsbeispiel einer glatten Oberfläche entspricht und auf der das Objekt 11 bzw. das Werkstück liegt. In diesem Fall bewegt sich der Lichtschnitt-Sensor 8 nicht nur in Richtung der X-Komponente, sondern auch in Richtung der Z-Komponente, um insbesondere den Abstand zur Oberfläche 20 zu verringern.

Beim Erkennen des Suchmusters innerhalb eines Messfensters bzw. des Sichtbereichs (Englisch: Field of View, abgekürzt: FOV) des Lichtschnitt-Sensors 8, also bei Erkennen der Oberfläche 20 wird die Bewegung der Suchfahrt derart geändert, sodass sie der obenstehenden und in der Fig. 3 dargestellte Bewegung des Lichtschnitt-Sensors 8 entspricht. Die Bewegung des Industrieroboters 1 wird dann entsprechend verändert, um das Objekt 11 zu erreichen.

## Patentansprüche

1. Verfahren zum Ermitteln der Position oder der Lage eines Objekts (11) mittels eines Lichtschnitt-Sensors (8), welcher ein Licht (16) aussendet, welches eine Lichtlinie (15) auf einer Oberfläche erzeugt, aufweisend folgende Verfahrensschritte:
- Durchführen einer Suchfahrt durch automatisches Bewegen des Lichtschnitt-Sensors (8) mit einer Bewegungskomponente rechtwinklig zur Lichtlinie (15) und rechtwinklig zur Austrittsrichtung des Lichts (16) mittels einer Bewegungsvorrichtung,
- während der Suchfahrt, Aufnehmen von Bilddaten mittels des Lichtschnitt-Sensors (8),
- Auswerten der Bilddaten,
- Erkennen einer markanten Stelle, insbesondere einer Außenkante (17) des Objekts (11) aufgrund der ausgewerteten Bilddaten, und
- Ermitteln der Position oder der Lage des Objekts (8) aufgrund der Position des Lichtschnitt-Sensors (8), die der markanten Stelle des Objekts (8) zugeordnet ist, und aufgrund eines Auswertens der der markanten Stelle des Objekts (8) zugeordneten Bilddaten.

2. Verfahren nach Anspruch 1, aufweisend Ermitteln des Abstands (d) zwischen dem Lichtschnitt-Sensors (8) und dem Objekt (11) an der Position des Lichtschnitt-Sensors (8), die der markanten Stelle des Objekts (8) zugeordnet ist, um die Position oder Lage des Objekts (11) zu Ermitteln.

3. Verfahren nach Anspruch 1 oder 2, aufweisend Bewegen des Lichtschnitt-Sensors (8) während der Suchfahrt in einer Richtung rechtwinklig zur Lichtlinie (15).

4. Verfahren nach einem der Ansprüche 1 bis 3, aufweisend Bewegen des Lichtschnitt-Sensors (8) während der Suchfahrt in einer Richtung rechtwinklig zur Austrittsrichtung des Lichts (16).

5. Verfahren nach einem der Ansprüche 1 bis 3, aufweisend
- Bewegen des Lichtschnitt-Sensors (8) während der Suchfahrt in einer Richtung ungleich rechtwinklig zur Austrittsrichtung des Lichts (16) bis eine Ebene (20) erkannt wird, auf der das Objekt (11) liegt, und
- anschließend Bewegen des Lichtschnitt-Sensors (8) während der Suchfahrt in einer Richtung rechtwinklig zur Austrittsrichtung des Lichts (16).

6. Verfahren nach einem der Ansprüche 1 bis 5, bei dem die Bewegungsvorrichtung als ein Industrieroboter (1) ausgebildet ist, der einen Roboterarm (2) und eine Steuervorrichtung (9) aufweist, wobei der Roboterarm (2) mehrere, hintereinander angeordnete Glieder (3-7), Antriebe zum Bewegen der Glieder (3-7) und eine Befestigungsvorrichtung umfasst, an der Lichtschnitt-Sensor (8) angeordnet ist, aufweisend Ansteuern der Antriebe des Roboterarms (2) mittels der Steuervorrichtung (9) derart, dass der Roboterarm (2) den Lichtschnitt-Sensor (8) während der Suchfahrt bewegt.

7. Verfahren nach Anspruch 6, bei dem die Position oder Lage des Objekts (11) relativ zu einem Basiskoordinatensystem (12) des Industrieroboters (1) ermittelt wird.

## Claims

1. Method for determining the position or the location of an object (11) by means of a light section sensor (8), which emits a light (16), which produces a light line (15) on a surface, comprising the following method steps:
- performing an search operation by automatically moving the light section sensor (8) with a movement component perpendicular to the light line (15) and perpendicular to the outlet direction of the light (16) by means of a movement device,
- during the search operation, capturing image data by means of the light section sensor (8),
- evaluating the image data,
- detecting a prominent point, in particular an outer edge (17) of the object (11) on the basis of the evaluated image data, and
- determining the position or the location of the object (8) on the basis of the position of the light section sensor (8), which is assigned to the prominent point of the object (8) and on the basis of an evaluation of the image data assigned to the prominent point of the object (8).

2. Method according to claim 1, comprising determining the distance (d) between the light section sensor (8) and the object (11) at the position of the light section sensor (8), which is assigned to the prominent point of the object (8), in order to determine the position or location of the object (11).

3. Method according to claim 1 or 2, comprising moving the light section sensor (8) during the search operation in a direction perpendicular to the light line (15).

4. Method according to any of claims 1 to 3, comprising moving the light section sensor (8) during the search operation in a direction perpendicular to the outlet direction of light (16).

5. Method according to any of claims 1 to 3, comprising
- moving the light section sensor (8) during the search operation in a direction that is not perpendicular to the outlet direction of the light (16) until a plane (20) detected on which the object (11) lies, and
- subsequently moving the light section sensor (8) during the search operation in a direction perpendicular to the outlet direction of the light (16).

6. Method according to any of claims 1 to 5, wherein the movement device is designed as an industrial sensor (1), which comprises a robot arm (2) and a control device (9), wherein the robot arm (2) comprises a plurality of links (3-7) arranged behind one another, drives for moving the links (3-7) and a fastening device, on which the light section sensor (8) is arranged, comprising controlling the drives of the robot arm (2) by means of the control device (9) such that the robot arm (2) moves the light section sensor (8) during the search operation.

7. Method according to claim 6, wherein the position or location of the object (11) is determined relative to a base coordinate system (12) of the industrial robot (1).

## Revendications

1. Procédé pour déterminer la position ou la situation d'un objet (11) au moyen d'un capteur à coupe optique (8) qui émet une lumière qui engendre une ligne de lumière (15) sur une surface, présentant les étapes de procédé suivantes :
- réalisation d'un trajet de recherche en déplaçant automatiquement le capteur à coupe optique (8) avec une composante de déplacement perpendiculairement à la ligne lumineuse (15) et perpendiculairement à la direction de sortie de la lumière (16) au moyen d'un dispositif de déplacement,
- pendant le trajet de recherche, enregistrement de données d'image au moyen du capteur à coupe optique (8),
- évaluation des données d'image,
- détection d'un emplacement proéminent, en particulier d'un bord extérieur (17) de l'objet (11), sur la base des données d'image évaluées, et
- détermination de la position ou de la situation de l'objet (8) sur la base de la position du capteur à coupe optique (8) associé à l'emplacement proéminent de l'objet (8) et sur la base d'une évaluation des données d'image associées à l'emplacement proéminent.

2. Procédé selon la revendication 1, comprenant la détermination de la distance (d) entre le capteur à coupe optique (8) et l'objet (11) au niveau de la position du capteur à coupe optique (8) qui est associé à l'emplacement proéminent de l'objet (8) pour déterminer la position ou la situation de l'objet (11).

3. Procédé selon la revendication 1 ou 2 présentant le déplacement du capteur de profilé lumineux (8) pendant le trajet de recherche dans une direction perpendiculaire à la ligne lumineuse (15).

4. Procédé selon l'une quelconque des revendications 1 à 3, présentant le déplacement du capteur à coupe optique (8) pendant le trajet de recherche dans une direction perpendiculaire à la direction de sortie de la lumière (16).

5. Procédé selon l'une des revendications 1 à 3, présentant
- le déplacement du capteur à coupe optique (8) pendant la course de recherche dans une direction inégalement perpendiculaire à la direction de sortie de la lumière (16) jusqu'à ce qu'un plan (20) sur lequel repose l'objet (11) soit détecté, et
- le déplacement ultérieur du capteur à coupe optique (8) pendant le trajet de recherche dans une direction perpendiculaire à la direction de sortie de la lumière (16).

6. Procédé selon l'une des revendications 1 à 5, dans lequel le dispositif de déplacement est réalisé en tant qu'un robot industriel (1) qui comporte un bras de robot (2) et un dispositif de commande (9), le bras de robot (2) présentant plusieurs membres (3-7) agencés les uns derrière les autres, des entraînements pour déplacer les membres (3-7) et un dispositif de fixation sur lequel est agencé un capteur à coupe optique (8), présentant le pilotage des entraînements du bras du robot (2) au moyen du dispositif de commande (9) de telle sorte que le bras du robot (2) déplace le capteur à coupe optique (8) pendant le trajet de recherche.

7. Procédé selon la revendication 6, dans lequel on détermine la position ou la situation de l'objet (11) par rapport à un système de coordonnées de base (12) du robot industriel (1).
